Europäisches Patentamt

European Patent Office

Office européen des brevets

(19)

(11) Numéro de publication: **0 117 786**
**B1**

# FASCICULE DE BREVET EUROPEEN

(12)

(45) Date de publication du fascicule du brevet:
20.04.88

(51) Int. Cl.⁴: **G 01 N 27/90**

(21) Numéro de dépôt: **84400201.4**

(22) Date de dépôt: **30.01.84**

(54) **Procédé et dispositif pour l'examen non destructif de jonctions rivetées ou analogues au moyen d'une sonde à courants de Foucault.**

(30) Priorité: **24.02.83 FR 8303043**

(43) Date de publication de la demande:
**05.09.84 Bulletin 84/36**

(45) Mention de la délivrance du brevet:
**20.04.88 Bulletin 88/16**

(84) Etats contractants désignés:
**DE GB IT NL**

(56) Documents cités:
**EP - A - 0 092 094**
**FR - A - 2 412 073**
**US - A - 4 061 968**

(73) Titulaire: **Société Nationale Industrielle Aérospatiale Société anonyme dite:, 37 Bld de Montmorency, F-75016 Paris (FR)**

(72) Inventeur: **Arnaud, Jean-Louis, 2 Square des Coquelicots, F-91760 Verrieres-Le-Buisson (FR)**
Inventeur: **Floret, Michel, 8, rue Marcelin Berthelot, F-92230 Gennevilliers (FR)**

(74) Mandataire: **Bonnetat, Christian et al, Cabinet PROPI Conseils 23 rue de Léningrad, F-75008 Paris (FR)**

## Description

La présente invention concerne un procédé et un dispositif pour l'examen non destructif de jonctions rivetées ou analogues au moyen d'une sonde à courants de Foucault. Quoique l'invention puisse être mise en œuvre dans de nombreuses applications, elle sera plus particulièrement décrite ci-après en rapport avec l'examen non destructif des jonctions des panneaux constituant la peau du fuselage d'un aéronef.

On sait que la peau du fuselage d'un aéronef est constituée de panneaux individuels assemblés par des jonctions à rivets dans lesquelles lesdits rivets sont alignés et équidistants. De telles jonctions par rivets fatiguent beaucoup au cours de l'utilisation de l'aéronef, notamment du fait des cycles de compression et de décompression auxquels est soumis le fuselage de celui-ci. Il peut en résulter la formation de criques se développant à partir des trous de passage des rivets dans les panneaux. Par suite, les jonctions s'affaiblissent et il est donc indispensable de surveiller périodiquement lesdites jonctions pour en connaître l'état.

L'examen non destructif des jonctions rivetées de la peau d'un aéronef est généralement réalisé au moyen d'une sonde à ultra-sons. Cependant, l'utilisation d'une telle sonde est longue et fastidieuse, notamment à cause de la réalisation obligatoire d'un couplage correct (par exemple à l'aide de vaseline) entre la sonde et le rivet examiné et à cause de la précision requise pour le positionnement de la sonde par rapport au rivet. A ces points de vue, il serait intéressant de pouvoir utiliser une sonde à courants de Foucault; cependant, les signaux délivrés par une telle sonde ne sont pas aisément exploitables. En effet, si l'on fait défiler une sonde à courants de Foucault, correctement équilibrée et orientée, le long d'une ligne de rivets sains, c'est-à-dire dont les trous de passages dans les panneaux ne sont pas criqués, on obtient un signal dont le cycle est aplati et allongé.

En revanche, si ladite sonde rencontre un rivet associé à une crique, elle fournit un cycle en large boucle croisée. Dans les deux cas, il est impossible à un observateur de faire correspondre les points du cycle avec les positions de la sonde le long de la ligne des rivets.

La présente invention a pour objet de permettre l'utilisation d'une telle sonde à courants de Foucault dans un appareil d'examen non destructif de type automatique ou tout au moins semi-automatique pour la surveillance de jonctions rivetées ou analogues.

A cette fin, selon l'invention, le procédé pour l'examen non destructif de jonctions rivetées ou analogues au moyen d'une sonde à courants de Foucault alimentée par un courant d'injection et délivrant un courant de détection, ladite sonde comportant un enroulement primaire d'injection et plusieurs enroulements secondaires de détection, lesdites jonctions comportant un alignement de rivets ou analogues équidistants et ladite sonde étant déplacée le long dudit alignement, caractérisé:

– en ce qu'on dispose lesdits enroulements secondaires deux à deux selon deux diamètres rectangulaires;

– en ce que, lors de l'examen d'une jonction, on fait défiler ladite sonde le long dudit alignement de rivets, de sorte que l'un desdits diamètres vient en coïncidence avec ledit alignement et on détermine deux composantes en quadrature dudit courant de détection;

– en ce qu'on examine à l'aide de ladite sonde une grande quantité de jonctions témoins semblables à celles dont on veut effectuer l'examen non destructif, lesdites jonctions témoins ne comportant pas, de façon sûre, de criques, et on enregistre la pluralité des valeurs correspondantes pour lesdites composantes en quadrature dudit courant de détection;

– en ce que, à partir de la pluralité desdites valeurs enregistrées, on détermine, pour l'une desdites composantes, un premier seuil au-delà duquel on est sûr que la sonde indique la présence d'un rivet et, pour l'autre desdites composantes, un second seuil au-delà duquel on est sûr que la sonde indique la présence d'une crique;

– en ce que, ensuite, on fait défiler ladite sonde le long dudit alignement de rivets à examiner et on détermine en continu lesdites composantes en quadrature correspondantes;

– en ce qu'on compare lesdites composantes ainsi déterminées respectivement auxdits seuils, pour en déduire la présence ou l'absence de criques; et

– en ce qu'on enregistre et/ou on affiche les résultats de la comparaison.

Ainsi, grâce à l'invention, on obtient des critères simples de détermination de la présence ou de l'absence de criques. La phase préliminaire d'enregistrement a pour objet de prendre en compte les dispersions possibles des caractéristiques des jonctions dues aux tolérances de fabrication, aux variations de positionnement de la sonde, aux variations des matières constitutives des panneaux de peau et des rivets, etc. . . et elle peut être réalisée sur les jonctions d'aéronefs neufs, d'un modèle identique à ceux dont on voudra vérifier les jonctions par la suite. On remarquera que la comparaison simultanée des composantes du signal de la sonde avec les deux seuils établit de façon certaine la coïncidence de la présence d'un rivet et d'une éventuelle crique.

Pour la mise en œuvre du procédé selon l'invention, un dispositif destiné à l'examen non destructif de jonctions rivetées ou analogues et comportant une sonde à courants de Foucault alimentée par un courant d'injection et délivrant un courant de détection, ladite sonde comportant un enroulement primaire d'injection et plusieurs enroulements secondaires de détection, est caractérisé en ce que lesdits enroulements secondaires sont disposés deux à deux selon deux diamètres rectangulaires et en ce qu'il comporte:

– des moyens de commande et de lecture de ladite sonde pour déterminer en continu deux composantes du signal de la sonde le long des deux diamètres rectangulaires;

– des moyens pour déterminer un seuil pour chacune desdites composantes;

– des moyens à mémoire pour emmagasiner lesdits seuils;

– des moyens de comparaison desdites composantes avec lesdits seuils;

– et des moyens d'enregistrement et/ou d'affichage des résultats de la comparaison.

Il est avantageux que lesdits enroulements secondaires soient répartis sur un même cercle centré sur l'enroulement primaire, que deux enroulements secondaires diamétralement opposés soient de même sens, mais de sens opposé aux deux autres enroulements secondaires et que les quatre enroulements secondaires soient reliés en série de façon que deux enroulements consécutifs soient de sens opposés.

De préférence, la distance séparant l'enroulement primaire d'injection d'un enroulement secondaire de détection est égale à la moitié de la distance séparant deux rivets consécutifs de ladite suite.

Avantageusement, afin de compenser le déphasage que subit le signal de détection de la sonde dans lesdits moyens de commande et de lecture, ceux-ci comportent un dispositif de déphasage commandable. De façon usuelle, les deux composantes du signal de la sonde sont obtenues par un double démodulateur synchrone en quadrature.

Dans un mode de réalisation avantageux, les moyens à mémoire pour emmagasiner lesdits seuils et les moyens de comparaison desdites composantes du signal de la sonde avec lesdits seuils sont formés par un microprocesseur.

On notera que le brevet US-A-4 061 968 décrit un procédé et un apparail d'examen non destructif à courants de Foucault dans lesquels le signal est décomposé en une composante résistive et en une composante réactive. Par ailleurs, le brevet FR-A-2 412 073 décrit un procédé d'examen non destructif de tubes par courants de Foucault, grâce auquel on détermine des défauts à partir des coordonnées horizontale et verticale des signaux.

Quoique non nécessairement, la présente invention est particulièrement appropriée à être mise en œuvre avec le dispositif portable d'examen non destructif décrit dans la demande EPA-0 117 787 déposée ce même jour au non de la Demanderesse.

Les figures du dessin annexé feront bien comprendre comment l'invention peut être réalisée.

La figure 1 est une vue schématique en perspective de la sonde à courants de Foucault conforme à la présente invention.

Les figures 2 et 3 illustrent respectivement l'influence d'un rivet sain et d'un rivet associé à une crique sur les lignes de courant engendrées par la sonde de la figure 1.

La figure 4 donne le schéma synoptique du dispositif de commande et de lecture de la sonde de la figure 1.

Les figures 5 à 7 illustrent le fonctionnement de la sonde de la figure 1 et du dispositif de la figure 4, lorsque ladite sonde est déplacée le long d'une ligne de rivets non associés à des criques.

Les figures 8 à 10 illustrent le fonctionnement de la sonde de la figure 1 et du dispositif de la figure 4, lorsque ladite sonde rencontre un rivet associé à une crique.

La figure 11 donne le schéma synoptique du dispositif d'examen non destructif à courants de Foucault, conforme à l'invention.

Sur ces figures, des références identiques désignent les éléments semblables.

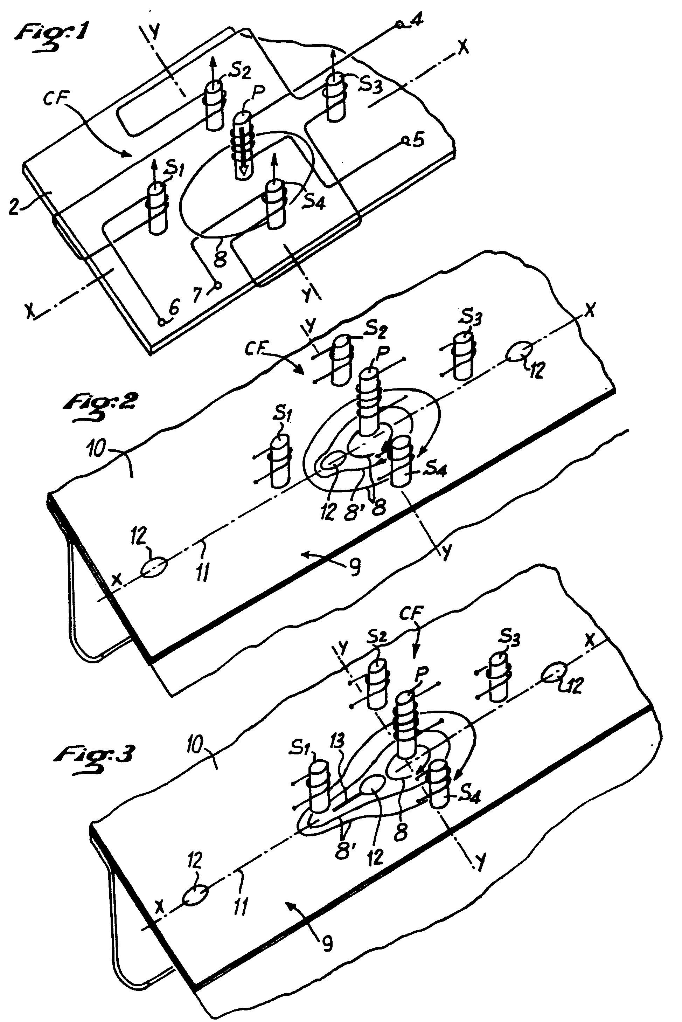

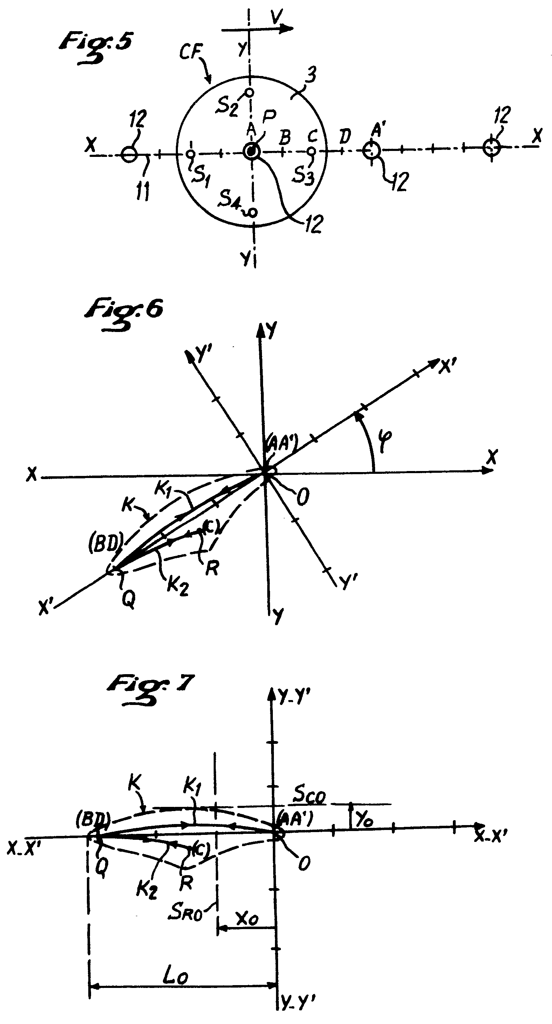

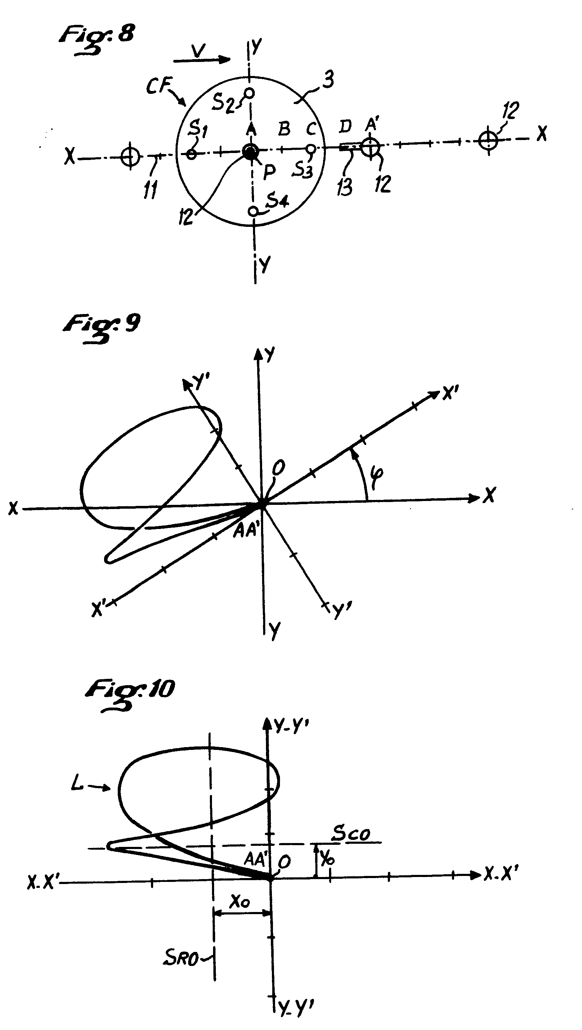

La sonde à courants de Fouchault CF, dont le schéma est représenté schématiquement en perspective sur la figure 1 au-dessus d'une surface 2 à examiner, comporte un enroulement primaire d'injection P et quatre enroulements secondaires de détection $S_1$ à $S_4$, chacun des enroulements primaire et secondaires comportant un noyau de ferrite ou analogue et ces cinq enroulements et leurs noyaux étant noyés dans un corps 3 de matière magnétiquement et électriquement isolante, non représenté sur les figures 1 à 3, mais visible sur les figures 5 et 8. Dans ce corps 3, les positions relatives des cinq enroulements sont figées, l'enroulement d'injection P étant disposé de façon centrale, alors que les enroulements de détection $S_1$ à $S_4$ sont diamétralement opposés deux à deux, les enroulements $S_1$ et $S_3$ déterminant un axe X–X orthogonal à un axe Y–Y déterminé par les enroulements $S_2$ et $S_4$. L'axe de l'enroulement d'injection P passe par le point d'intersection des axes X–X et les enroulements $S_1$ à $S_4$ sont équidistants de ce point d'intersection.

L'enroulement d'injection P est pourvu de deux bornes 4 et 5 entre lesquelles on injecte un signal électrique d'excitation, tandis que les enroulements $S_1$ à $S_4$ sont montés en série de façon que les enroulements de détection $S_1$ et $S_3$ soient de même sens et que les enroulements $S_2$ et $S_4$ soient de sens inverse aux enroulements $S_1$ et $S_3$. Le montage en série des enroulements de détection $S_1$ à $S_4$ comporte deux bornes 6 et 7 entre lesquelles on recueille le signal de détection, c'est-à-dire un signal de déséquilibre de la sonde.

Les enroulements $S_1$ à $S_4$ sont identiques et équilibrés pour que, lorsque l'enroulement d'injection P reçoit le signal d'injection entre ses bornes 4 et 5, il engendre dans une surface homogène 2 des courants induits suivant les lignes de courants circulaires 8 et donnant naissance dans les enroulements de détection $S_1$ à $S_4$ à des signaux égaux et deux à deux opposés, de sorte que le signal aux bornes 6 et 7 est nul. Dans l'agencement de la figure 1, les enroulements $S_1$ et $S_3$ sont considérés comme des enroulements de mesure, alors que les enroulements $S_2$ et $S_4$ sont considérés comme enroulements de compensation.

Lorsque la surface au-dessus de laquelle se trouve la sonde CF n'est pas homogène, les lignes de courants induits par l'enroulement d'injection P ne sont plus circulaires et subissent des déformations au voisinage des hétérogénéités. Sur la figure 2, on a illustré une surface hétérogène 9, par exemple la peau d'un fuselage d'aéronef constituée de panneaux individuels d'aluminium 10 assemblés par des lignes 11 de rivets 12 en titane, et on a disposé la sonde CF de façon que son axe X–X soit superposé à une ligne axiale 11 de rivets 12. On peut voir sur cette figure 2 que les lignes de courants induits 8 éloignées d'un rivet 12 restent circulaires et que les lignes de courants induits 8' proches d'un rivet subissent des déformations entourant ledit rivet. Sur la figure 3, semblable à la figure 2, on a supposé de plus qu'un panneau individuel 10 comportait une crique 13, ayant pour origine le trou de passage d'un rivet 12. On peut y voir que les déformations des lignes de courants induits sont encore accentuées.

Ainsi, une sonde CF équilibrée pour donner un signal nul entre ses bornes de sortie 6 et 7 lorsque la surface 2 est homogène ou lorsqu'elle se trouve en regard d'une partie homogène d'une surface hétérogène 9, fournira un signal de déséquilibre lorsque les lignes de courants induits subiront des déformations à cause d'hétérogénéités 12 ou 13.

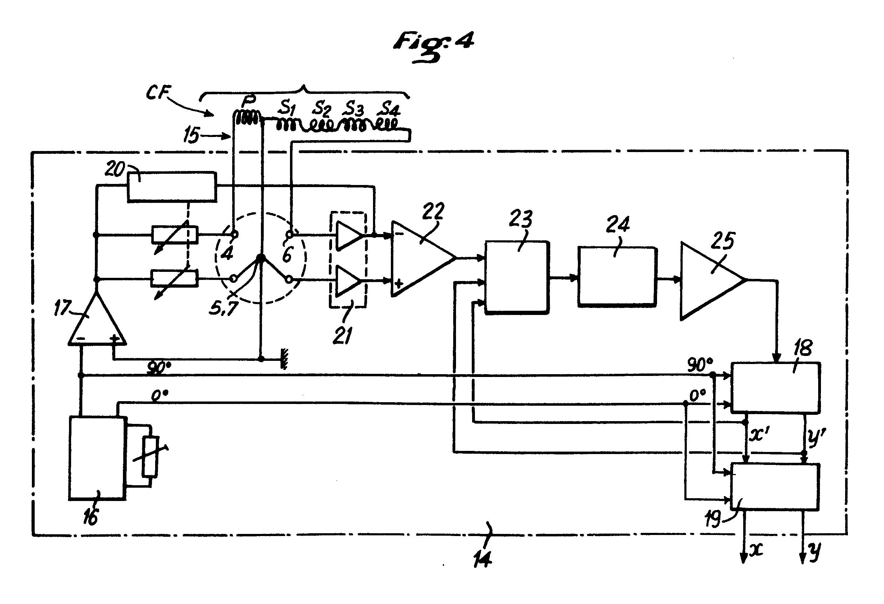

Comme le montre la figure 4, la sonde CF est montée dans un dispositif de commande et de lecture 14, par l'intermédiaire d'une liaison 15. Le dispositif 14 comporte un générateur électrique 16 d'un signal à fréquence porteuse, de préférence sinusoïdale, et d'un signal de même fréquence, mais déphasé en arrière de 90°. On obtient ainsi un signal de référence de phase 90° destiné à servir de signal d'injection et un signal de référence de phase 0°. Le signal d'injection (phase 90°) est appliqué, d'une part, à un amplificateur 17 adapteur de courant et, d'autre part, à un double démodulateur synchrone 18 et à un déphaseur 19. Le signal de référence de phase 0° est appliqué au double démodulateur synchrone 18 et au déphaseur 19.

A la sortie de l'amplificateur 17, le signal d'injection est transmis à l'enroulement primaire P par l'intermédiaire d'un détecteur d'adaptation 20.

Par ailleurs, les enroulements secondaires $S_1$ à $S_4$ sont reliés à un système adaptateur d'impédance 21 suivi d'un amplificateur de détection 22, d'un dispositif 23 d'équilibrage de la sonde CF, d'un éventuel filtre 24 destiné à éliminer les fréquences parasites de la fréquence porteuse et d'un amplificateur 25. Ainsi, le signal d'injection appliqué par le générateur 16 à l'enroulement primaire P par l'intermédiaire de l'amplificateur 17 et de l'adaptateur 20 est détecté par les enroulements $S_1$ à $S_4$, puis adapté en impédance dans l'adapteur 21, après quoi, après amplification (en 22), équilibrage (en 23), filtrage (en 24) et amplification (en 25), il est appliqué au double démodulateur 18. Celui-ci démodule la porteuse en extrayant les deux composantes x' et y' en quadrature de l'éventuel signal de déséquilibrage qui est dû à une hétérogénéité 12 ou 13. Enfin, les deux composantes orthogonales x' et y' du signal de déséquilibre, qui ont subi un déphasage dans la portion de circuit $S_1$ à $S_4$, 21 à 25, sont adressées au déphaseur 19, qui délivre à sa sortie deux composantes x et y en phase avec les axes X–X et Y–Y, respectivement.

Sur la figure 5, on a supposé que la sonde CF se déplaçait dans le sens de la flèche V, de façon que son axe X–X reste constamment confondu avec la ligne axiale 11 des rivets 12, que la distance séparant le centre de l'enroulement primaire d'injection P du centre de chacun des enroulements secondaires de détection $S_1$ à $S_4$ était égale à la moitié de la distance séparant les centres de deux rivets 12 consécutifs, et qu'aucune crique 13 n'existait.

Si dans la position initiale, l'axe de l'enroulement primaire d'injection P passe par le centre A d'un rivet 12, chacune des sondes $S_1$ à $S_4$ est suffisamment éloignée d'un rivet 12 pour que la portion de surface embrassée par la sonde CF paraisse homogène à celle-ci. Il n'apparaît donc aucun signal de déséquilibre entre les bornes 6 et 7, si l'équilibrage de la sonde CF réalisé par le dispositif 23 est correct. Dans un système d'axes rectangulaires X–X, Y–Y ( voir la figure 7) identiques aux axes correspondant de la sonde CF, le signal de déséquilibre est alors représenté par l'origine 0 desdits axes. On remarquera que, par suite du déphasage mentionné ci-dessus et corrigé par le déphaseur 19, à la sortie du double démodulateur synchrone en quadrature 18, le système d'axes rectangulaires X–X, Y–Y a subi une rotation d'amplitude $\zeta$, les axes X–X et Y–Y occupant respectivement les positions X'–X' et Y'–Y'. Lorsque la sonde CF est déplacée vers la droite de la figure 5 en direction du rivet 12 de centre A', le point caractéristique du signal de déséquilibre entre les bornes 6 et 7 décrit une portion de courbe $K_1$ (voir les figures 6 et 7) qui, partant de l'origine 0 des axes, s'éloigne de l'axe X–X ou X'–X' pour rejoindre celui-ci en Q, lorsque l'axe de l'enroulement P atteint le point B de la ligne 11, situé au quart de la distance entre les deux rivets 12 voisins. Si la sonde CF continue son mouvement d'avance, le point caractéristique dudit signal de déséquilibre décrit une portion de courbe $K_2$ (opposée à la portion $K_1$ par rapport à l'axe X–X ou X'–X') se rapprochant de l'axe Y–Y ou Y'–Y'. Cette portion de courbe $K_2$ s'arrête en R, lorsque l'axe de l'enroulement P atteint le point C, milieu de la distance séparant les deux rivets 12 voisins.

Quand ledit axe de l'enroulement P passe du point C au point D (correspondant aux trois-quarts de la distance de deux rivets 12 voisins), ledit point caractéristique décrit, en sens inverse, la portion de courbe $K_2$, du point R au point Q. Enfin, lorsque l'axe de l'enroulement P passe du point D au point A', ledit point caractéristique décrit la portion de courbe $K_1$ de Q vers 0.

Ainsi, si la sonde CF est déplacée le long d'une ligne 11 comportant une pluralité de rivets 12 identiques et régulièrement espacés, le point caractéristique du signal de déséquilibre entre les bornes 6 et 7 décrit cycliquement et successivement la portion de courbe $K_1$ de 0 vers Q, puis la portion de courbe $K_2$ du Q vers R, puis la portion de courbe $K_2$ de R vers Q, puis la portion de courbe

$K_1$ de Q vers O, puis la portion de courbe $K_1$ de O vers Q, etc. . . . Cependant, à cause des variations possibles de positionnement de la sonde, des matières constitutives des rivets 12 et des panneaux 10, des distances entre rivets, etc. . . , il se produit une certaine dispersion et les portions de courbes $K_1$ et $K_2$ ne sont pas obligatoirement absolument identiques et superposées pour tous les cycles.

Aussi, selon l'invention, on effectue l'examen d'un grand nombre de lignes 11 de rivets 12, fabriquées de façon identique, pour connaître l'enveloppe globale K des portions de courbes $K_1$ et $K_2$. De plus, on mesure une grandeur $X_o$ égale à une fraction, par exemple le tiers, de la longueur Lo de l'enveloppe K, ainsi que la hauteur $Y_o$ de celle-ci par rapport à l'axe X–X. Cette grandeur $X_o$ est destinée à déterminer un seuil $S_{Ro}$, au-delà duquel on est sûr que le signal de déséquilibre apparaissant entre les bornes 6 et 7 correspond à la présence d'un rivet. Par ailleurs, la hauteur $Y_o$ permet de déterminer un seuil $S_{co}$ au-delà duquel on est sûr qu'un point caractéristique ne peut appartenir à une courbe $K_1$, $K_2$ représentative d'un rivet sain.

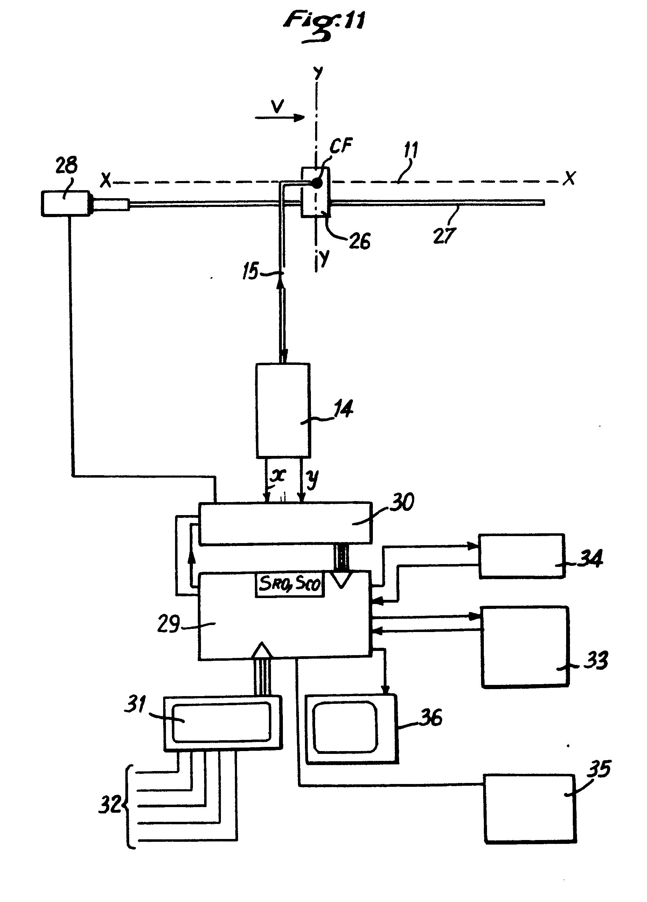

Les figures 8 à 10 correspondent respectivement aux figures 5 à 7 et illustrent le processus de détection lorsqu'une crique 13 s'est développée dans un panneau 10, à partir du trou de passage d'un rivet 12. On voit alors que la courbe L décrite par le point caractéristique est fort différente de la courbe $K_1$, $K_2$ associée à un rivet sain et franchit largement le seuil $S_{co}$ parallèlement à l'axe Y–Y ou Y′–Y′, ainsi que le seuil $S_{Ro}$ parallèlement à l'axe X–X ou X′–X′. Ainsi le franchissement du seuil $S_{Ro}$ est significatif de la présence d'un rivet 12, que celui-ci soit sain ou criqué, alors que le franchissement du seuil $S_{co}$ est significatif d'une crique 13. Par ailleurs, l'analyse du sens de rotation de la boucle croisée montrée par la figure 10 permet de déterminer exactement la direction de la crique 13.

Selon l'invention, on utilise les deux seuils $S_{Ro}$ et $S_{co}$ pour l'examen non destructif d'une jonction rivetée. A cet effet, on peut par exemple utiliser le dispositif dont le schéma synoptique est représenté sur la figure 11.

La sonde CF est montée dans un porte-sonde 26 pouvant coulisser le long d'une tige de guidage 27, parallèle à la ligne 11 de rivets à examiner, de façon que ladite sonde CF ait son axe X–X confondu constamment avec ladite ligne axiale 11. La tige de guidage 27 est associée à des moyens de mesure 28, par exemple potentiométriques ou du type décrit dans le brevet US-A-3 898 555, susceptibles de délivrer à chaque instant l'abscisse de la sonde CF le long de la tige 27. La sonde CF est commandée et lue par le dispositif 14 auquel elle est reliée par la liaison 15 (voir également la figure 4). Le dispositif de la figure 11 comporte de plus un microprocesseur 29 auquel sont transmises, par l'intermédiaire d'un convertisseur analogique-numérique 30, l'abscisse de la sonde CF délivrée par le dispositif 28 et les composantes x et y du signal de déséquilibre de ladite sonde. Le microprocesseur 29 est relié à un clavier 31 permettant de lui communiquer des informations 32, telles que l'identification de la ligne 11 à examiner, à une unité de stockage 33, par exemple du type disque dur, à une disquette de programmation 34, à une imprimante 35 et à un dispositif de visualisation 36.

Dans une première étape du procédé selon l'invention, on fait défiler la sonde CF devant une grande longueur et/ou un grand nombre de lignes 11 non pourvues de criques (jonctions d'aéronefs neufs) afin que le microprocesseur 29 détermine les seuils $S_{Ro}$ et $S_{co}$ qu'il garde en mémoire. Ensuite, lorsque la sonde CF examine une ligne 11 de rivets 12 servant de jonctions de panneaux 10 à un aéronef à surveiller, le microprocesseur 29 compare à chaque instant les composantes x et y du signal de déséquilibre avec les seuils $S_{Ro}$ et $S_{co}$ et il peut ainsi, non seulement détecter et compter les rivets 12, mais encore détecter les criques 13. Il fournit ces informations aux appareils périphériques 33, 35 et 36.

**Revendications**

1. Procédé pour l'examen non destructif de jonctions rivetées ou analogues (11) au moyen d'une sonde (CF) à courants de Foucault alimentée par un courant d'injection et délivrant un courant de détection, ladite sonde comportant un enroulement primaire d'injection et plusieurs enroulements secondaires de détection, lesdites jonctions (11) comportant un alignement de rivets ou analogques (12) équidistants et ladite sonde (CF) étant déplacée le long dudit alignement, caractérisé:

– en ce qu'on dispose lesdits enroulements secondaires deux à deux selon deux diamètres rectangulaires (X–X; Y–Y);

– en ce que, lors de l'examen d'une jonction, on fait défiler ladite sonde le long dudit alignement de rivets, de sorte que l'un desdits diamètres vient en coïncidence avec ledit alignement et on détermine deux composantes (x, y) en quadrature dudit courant de détection;

– en ce qu'on examine à l'aide de ladite sonde (CF) une grande quantité de jonctions témoins semblables à celles dont on veut effectuer l'examen non destructif, lesdites jonctions témoins ne comportant pas, de façon sûre, de criques (13), et on enregistre la pluralité des valeurs correspondantes pour lesdites composantes (x, y) en quadrature dudit courant de détection;

– en ce que, à partir de la pluralité desdites valeurs enregistrées, on détermine, pour l'une desdites composantes, un premier seuil ($S_{Ro}$) au-delà duquel on est sûr que la sonde indique la présence d'un rivet et, pour l'autre desdites composantes, un second seuil ($S_{co}$) au-delà duquel on est sûr que la sonde indique la présence d'une crique;

– en ce que, ensuite, on fait défiler ladite sonde (CF) le long dudit alignement de rivets (12) à examiner et on détermine en continu lesdites composantes (x, y) en quadrature correspondantes;

– en ce qu'on compare lesdites composantes (x, y) ainsi déterminées respectivement aux seuils

(S$_{Ro}$ et S$_{co}$), pour en déduire la présence ou l'absence de criques; et

– en ce qu'on enregistre et/ou on affiche les résultats de la comparaison.

2. Dispositif pour l'examen non destructif de jonctions rivetées ou analogues (11) destiné à la mise en œuvre du procédé de la revendication 1, comportant une sonde (CF) à courants de Foucault alimentée par un courant d'injection et délivrant un courant de détection, ladite sonde comportant un enroulement primaire d'injection et plusieurs enroulements secondaires de détection, caractérisé en ce que lesdits enroulements secondaires sont disposés deux à deux selon deux diamètres rectangulaires (X–X; Y–Y) et en ce qu'il comporte:

– des moyens de commande et de lecture (14) de ladite sonde (CF) pour déterminer en continu deux composantes (x, y) du signal de la sonde le long des deux diamètres rectangulaires (X–X; Y–Y);

– des moyens pour déterminer un seuil (S$_{Ro}$ ou S$_{co}$) pour chacune desdites composantes (x, y);

– des moyens à mémoire (29) pour emmagasiner lesdits seuils (S$_{Ro}$ et S$_{co}$);

– des moyens de comparaison (29) desdites composantes (x, y) avec lesdits seuils (S$_{Ro}$ et S$_{co}$);

– et des moyens d'enregistrement et/ou d'affichage (33, 35, 36) des résultats de la comparaison.

3. Dispositif selon la revendication 2, caractérisé en ce que lesdits enroulements secondaires sont répartis sur un même cercle centré sur l'enroulement primaire, en ce que deux enroulements secondaires diamétralement opposés sont de même sens, mais de sens opposé aux deux autres enroulements secondaires et en ce que les quatre enroulements secondaires sont reliés en série de façon que deux enroulements consécutifs soient de sens opposés.

4. Dispositif selon la revendication 3, caractérisé en ce que la distance séparant l'enroulement primaire d'injection (P) d'un enroulement secondaire de détection (S$_1$ à S$_4$) est égale à la moitié de la distance séparant deux rivets consécutifs (12) dans ladite suite (11).

5. Dispositif selon l'une des revendications 2 à 4, caractérisé en ce que les moyens de commande et de lecture (14) de la sonde (CF) comportent un déphaseur commandable (19).

6. Dispositif selon l'une des revendications 2 à 5, caractérisé en ce que les moyens à mémoire pour emmagasiner les seuils (S$_{Ro}$ et S$_{co}$) et les moyens de comparaison desdites composantes (x, y) du signal de la sonde (CF) avec les seuils (S$_{Ro}$ et S$_{co}$) sont formés par un microprocesseur (29).

## Claims

1. Process for the non-destructive examination of riveted joints (11) or the like by means of a probe (CF) employing eddy currents, fed by an injection current and furnishing a detection current, said probe comrising a primary injection winding and several secondary detection windings, said joints (11) comprising a succession of aligned and equidistant rivets (12) or the like, and said probe (CF) being displaced along said succession of aligned rivets, characterized by:

– disposing said secondary windings in two's along two right angled diameters (X–X; Y–Y);

– during the examination of a joint, displacing said probe along said succession of aligned rivets, so that one of said diameters coincides with said succession of aligned rivets, and determining two components (x, y) in quadrature of said detection current;

– examining, with the aid of said probe (CF), a large quantity of control joints similar of the ones which are to be examined in non-destructive manner, said control joints being sure not to comprise cracks (13), and recording the plurality of corresponding values for said components (x, y) in quadrature of said detection current;

– from the plurality of said recorded values, determining, for the one of said components, a first threshold (S$_{Ro}$) beyond which it is sure that the probe indicates the presence of a rivet and for the other of said components, a second threshold (S$_{co}$) beyond which it is sure that the probe indicates the presence of a crack;

– thereafter advancing said probe (CF) along said succession of rivets (12) to be examined and continuously determining said corresponding components (x, y) in quadrature;

– comparing said components (x, y) so determined with the thresholds (S$_{Ro}$ and S$_{co}$) respectively, in order to deduce therefrom the presence or absence of cracks; and

– recording and/or displaying the results of the comparison.

2. Device for the non-destructive examination of riveted joints (11) or the like, for carrying out the process of claim 1, comprising a probe (CF) employing eddy currents, fed by an injection current and furnishing a detection current, said probe comprising a primary injection winding and several secondary detection windings, characterized in that said secondary windings are disposed in two's along two right angled diameters (X–X; Y–Y), and in that it comprises:

– means (14) for controlling and reading said probe (CF) for continuously determining two components (x, y) of the signal from the probe along the two right angled diameters (X–X; Y–Y);

– means for determining a threshold (S$_{Ro}$ or S$_{co}$) for each of said components (x, y);

– memory means (29) for storing said thresholds (S$_{Ro}$ and S$_{co}$);

– means (28) for comparing said components (x, y) with said thresholds (S$_{Ro}$ and S$_{co}$); and

– means (33, 35, 36) for recording and/or displaying the results of the comparison.

3. Device according to claim 2, characterized in that said secondary windings are distributed on a same circle centred on the primary winding, in that two diametrically opposite secondary windings are of the same direction, but of direction opposite the other two secondary windings and in that the four secondary windings are connected in series so that two consecutive windings are of opposite directions.

4. Device according to claim 3, characterized in that the distance separating the primary injection winding (P) from a secondary detection winding ($S_1$ to $S_4$) is equal to half the distance separating two consecutive rivets (12) in said succession of rivets (11).

5. Device according to any one of claims 2 to 4, characterized in that the means (14) for controlling and reading the probe (CF) comprise a controllable phase shift device (19).

6. Device according to any one of claims 2 to 5, characterized in that the memory means for storing the thresholds ($S_{Ro}$ and $S_{Co}$) and the means for comparing said components (x, y) of the signal from the probe (CF) with the thresholds ($S_{Ro}$ and $S_{Co}$) are formed by a microprocessor (29).

## Patentansprüche

1. Verfahren zur zerstörungsfreien Prüfung von Nietverbindungen o.ä. (11) mittels einer mit einer Injektionsstrom gespeisten Wirbelstromsonde (CF), die einen Detektorstrom liefert, wobei die Sonde eine primäre Injektionswicklung und mehrere sekundäre Detektorwicklungen umfasst, wobei die Verbindungen (11) eine Aufreihung von äquidistanten Nieten o.ä. (12) umfassen und die Sonde (CF) entlang dieser Aufreihung bewegt wird, dadurch gekennzeichnet, dass

– die sekundären Wicklungen jeweils zu zwei und zwei auf rechtwinklig aufeinander stehenden Durchmesserlinien (X–X; Y–Y) angeordnet sind;

– bei Prüfung einer Verbindung die Sonde entlang der Aufreihung der Nieten abläuft, sodass eine der Durchmesserlinien auf diese Aufreihung fällt, und zwei quadratische Komponenten (x, y) des Detektorstroms bestimmt werden;

– mit Hilfe der Sonde (CF) eine grosse Anzahl von Bezugsverbindungen untersucht wird, die ähnlich den zerstörungsfrei zu prüfenden Verbindungen sind, wobei die Bezugsverbindungen mit Sicherheit keine Risse (13) aufweisen, und dass man die Vielzahl von entsprechenden Werten für die quadratischen Komponenten (x, y) des Detektorstroms erfasst;

– ausgehend von der Vielzahl dieser erfassten Werte, für die eine dieser Komponenten eine erste Schwelle ($S_{Ro}$), oberhalb derer man sicher ist, dass die Sonde das Vorhandensein eines Niets anzeigt, und für die andere dieser Komponenten eine zweite Schwelle ($S_{Co}$) bestimmt wird, oberhalb derer man sicher ist, dass die Sonde das Vorhandensein eines Risses anzeigt;

– dann die Sonde (CF) entlang der Aufreihung der Nieten (12) zur Prüfung abläuft, und dass fortlaufend die jeweiligen quadratischen Komponenten (x, y) bestimmt werden;

– die so bestimmten Komponenten (x, y) jeweils mit Schwellen ($S_{Ro}$ und $S_{Co}$) verglichen werden,

um daraus das Vorhandensein oder die Abwesenheit von Rissen abzuleiten; und dass

– die Vergleichsresultate erfasst und/oder angezeigt werden.

2. Vorrichtung zur zerstörungsfreien Prüfung von Nietverbindungen o.ä., (11), vorgesehen zur Durchführung des Verfahrens nach Anspruch 1, mit einer mit einem Injektionsstrom gespeisten Wirbelstromsonde (CF), die einen Detektorstrom liefert, wobei die Sonde eine primäre Injektionswicklung und mehrere sekundäre Detektorwicklungen umfasst, dadurch gekennzeichnet, dass die sekundären Wicklungen jeweils zu zwei und zwei auf rechtwinklig aufeinander stehenden Durchmesserlinien (X–X; Y–Y) angeordnet sind, und dass sie umfasst:

– Mittel zum Steuern und Auslesen (14) der Sonde (CF), um fortlaufend zwei Komponenten (x, y) des Sondensignals entlang den beiden rechtwinklig aufeinander stehenden Durchmesserlinien (X–X; Y–Y) zu bestimmen;

– Mittel zum Bestimmen einer Schwelle ($S_{Ro}$ oder $S_{Co}$) für jede der Komponenten (x, y);

– Speicherungsmittel (29) zum Abspeichern der Schwellen ($S_{Ro}$ und $S_{Co}$);

– Mittel (29) zum Vergleichen der Komponenten (x, y) mit den Schwellen ($S_{Ro}$ und $S_{Co}$);

– und Mittel zum Erfassen und/oder Anzeigen (33, 35, 36) der Ergebnisse des Vergleichs.

3. Vorrichtung nach Anspruch 2, dadurch gekennzeichnet, dass die sekundären Wicklungen auf demselben Kreis verteilt sind, in dessen Mittelpunkt die primäre Wicklung angeordnet ist, dass zwei diametral entgegengesetzte Wicklungen den gleichen Wicklungssinn aufweisen, jedoch den umgekehrten Wicklungssinn der beiden anderen sekundären Wicklungen, und dass die vier sekundären Wicklungen derart in Reihe geschaltet sind, dass zwei aufeinanderfolgende Wicklungen den entgegengesetzten Wickungssinn aufweisen.

4. Vorrichtung nach Anspruch 3, dadurch gekennzeichnet, dass der Abstand zwischen der primären Injektionswicklung (P) und einer sekundären Detektorwicklung ($S_1$ bis $S_4$) gleich der Hälfte des Abstands zwischen zwei aufeinanderfolgenden Nieten (12) in der Reihe (11) ist.

5. Vorrichtung nach einem der Ansprüche 2 bis 4, dadurch gekennzeichnet, dass die Mittel zum Steuern und Auslesen (14) der Sonde (CF) einen steuerbaren Phasenschieber (19) umfassen.

6. Vorrichtung nach einem der Ansprüche 2 bis 5, dadurch gekennzeichnet, dass die Speichermittel zum Abspeichern der Schwellen ($S_{Ro}$ und $S_{Co}$) und die Mittel zum Vergleichen der Komponenten (x, y) des Sondensignals (CF) mit den Schwellen ($S_{Co}$ und $S_{ro}$) durch einen Mikroprozessor (29) gebildet werden.

Fig.1

Fig.2

Fig.3

Fig. 4

0 117 786

Fig.5

Fig.6

Fig.7

13

*Fig: 8*

*Fig: 9*

*Fig: 10*

Fig:11